# DEMANDE DE BREVET EUROPEEN

(11) **EP 1 662 167 A1**
(43) Date de publication de la demande: **31.05.2006**
(21) Numéro de dépôt: 04106174.8
(22) Date de dépôt: 30.11.2004
(51) Int. Cl.: F16F 9/02

(54) **Ressort pneumatique et amortisseur à ressort pneumatique**

(71) Demandeur: Willé, Jean-Joseph, 4690 Wonck (BE); Dardenne, Daniel, 4682 Heure Le Romain (BE); Schoofs, Pascal, 4601 Argenteau (BE)
(72) Inventeur: Willé, Jean-Joseph, 4690 Wonck (BE); Dardenne, Daniel, 4682 Heure Le Romain (BE); Schoofs, Pascal, 4601 Argenteau (BE)
(74) Mandataire: Leherte, Georges M.L.M.

(57) **Abrégé**

L'invention concerne un ressort pneumatique (1), comprenant un piston (2) coulissant de manière télescopique dans un cylindre fermé (3) de façon à définir deux chambres (3') et (3"), tandis qu'un orifice (4) dans la paroi du cylindre (3) fait communiquer l'intérieur du cylindre (4) avec une chambre auxiliaire (5).
Le ressort pneumatique selon l'invention comprend de préférence des moyens de régulation de pression (14) avec une membrane élastiquement déformable coopérant avec un joint, permettant la mise en communication d'une connexion vers la chambre auxiliaire (5) avec une connexion d'évacuation ou de communication vers un réservoir à gaz.

L'invention concerne, en outre, un tel ressort pneumatique, associé à un amortisseur hydraulique, dans lequel un cylindre hydraulique (6) est associé au piston (2) du ressort pneumatique (1) tandis qu'un axe (7) de l'amortisseur hydraulique prend appui sur le cylindre (3) du ressort pneumatique.

## Description

L'invention concerne des perfectionnements aux ressorts pneumatiques en général et en particulier aux amortisseurs à ressorts pneumatiques.

De tels ressorts et amortisseurs sont notamment utilisés pour les véhicules de type "motocyclette".
Ils impliquent un piston coulissant de manière télescopique dans un cylindre, en particulier dans un cylindre fermé en formant deux chambres, dont l'une agit en tant que ressort positif et l'autre en tant que ressort négatif. Les ressorts pneumatiques présentent la caractéristique bien connue d'être particulièrement sensible à la variation de charge qui leur est appliquée, à la température ambiante, et à un échauffement lors de leur utilisation. Ce dernier phénomène se manifeste plus particulièrement dans le cas des amortisseurs à ressort pneumatique, dans lesquels un amortisseur hydraulique est associé à un ressort pneumatique ou incorporé à l'intérieur d'un ressort pneumatique.
La variation de charge intervient, par exemple, lors de l'utilisation d'une moto avec un passager, ou en utilisation "raid" suite à la variation de poids du réservoir de carburant entre le point de départ et le point d'arrivée.

Divers systèmes de régulation ou de compensation de la pression dans les ressorts pneumatiques ont été proposés antérieurement afin de remédier à ces phénomènes.
On a notamment proposé un orifice mettant en communication l'une des chambres d'un ressort à cylindre fermé avec la pression atmosphérique; on a également proposé divers systèmes d'évacuation d'un excès de pression et/ou de re-pressurisation de la / des chambre(s) du cylindre ; on a proposé d'autres solutions, pneumatiques ou mécaniques, pour agir sur la variation de propriétés du ressort.
On connaît, d'autre part, le brevet américain 6.135.434 qui propose un système de by-pass entre les deux chambres d'un ressort pneumatique à cylindre fermé, associé à une valve de mise sous pression du ressort pneumatique.

La présente invention a pour objectif de fournir un système permettant de compenser l'échauffement d'un ressort pneumatique et d'évacuer la pression excédentaire dans un tel ressort, en évitant certains inconvénients des systèmes antérieurs, tout en offrant une fiabilité et une simplicité optimales.

Le ressort pneumatique selon l'invention, comprend un piston coulissant de manière télescopique dans un cylindre fermé, de façon à définir deux chambres, tandis qu'un orifice, prévu dans la paroi du cylindre, fait communiquer l'intérieur du cylindre avec une chambre auxiliaire, distincte (séparée) des deux volumes actifs (les deux chambres) du ressort. Cette disposition implique qu'à tout instant une sous-pression est appliquée sur la chambre auxiliaire, sauf lorsque le joint d'étanchéité du piston se situe exactement au niveau de l'orifice (dans quel cas les deux chambres du ressort et la chambre auxiliaire se trouveront en équilibre de pression).
Pour le fonctionnement optimal du système selon l'invention, il est important que le "point de référence" du ressort pneumatique, c'est à dire le point où les deux chambres du ressort et la chambre auxiliaire se trouvent en équilibre, se situe le plus près possible du point où le véhicule se trouve en sustentation statique, appelé le "point d'assiette" du véhicule ou du ressort.

Selon une caractéristique préférée de l'invention, l'orifice dans la paroi du cylindre est ainsi distant de moins de 25% de la longueur totale du cylindre par rapport à la position du piston au point d'assiette du ressort pneumatique (en d'autres termes, entre plus et moins 25% par rapport au point d'assiette), et plus particulièrement distant de moins de 1/10ème (de la longueur du cylindre) par rapport au point d'assiette.
La chambre auxiliaire peut prendre n'importe quelle forme et se situer à n'importe quel endroit du véhicule, pour autant qu'elle soit en communication avec l'orifice dans la paroi du cylindre.

Dans un mode de réalisation particulier de l'invention, la chambre auxiliaire peut, par exemple, consister en une chambre annulaire apposée à la paroi externe du cylindre à hauteur de l'orifice.
Le volume interne de la chambre auxiliaire peut prendre des valeurs très diverses, selon l'application du ressort et l'orientation choisie dans le cadre de cette application ; en général le volume de la chambre auxiliaire ne dépassera pas de manière importante le volume intérieur du cylindre (ou "volume principal du ressort").
II y a lieu de préciser que, dans le contexte du présent document, l'expression "volume interne de la chambre auxiliaire", également appelé "volume auxiliaire", comprend la totalité des volumes en communication directe et continue avec la chambre auxiliaire proprement dite, telle que décrite plus haut (comprenant notamment d'éventuels conduits de communication, les volumes d'éventuels moyens d'alimentation/d'évacuation, moyens de régulation, etc., en communication directe et continue avec cette chambre auxiliaire).

L'invention concerne, plus particulièrement, un tel ressort pneumatique (avec un orifice dans la paroi du cylindre et une chambre auxiliaire par rapport au volume actif ou volume principal du ressort) associé à un amortisseur hydraulique, dans lequel un cylindre hydraulique est associé au piston du ressort pneumatique, tandis qu'un axe de l'amortisseur hydraulique prend appui sur le cylindre du ressort pneumatique.

Dans un mode de réalisation particulièrement préféré de l'invention, la chambre auxiliaire du ressort pneumatique communique avec des moyens d'alimentation et/ou d'évacuation de pression et/ou de régulation de pression.

Selon une caractéristique préférée de ce mode de réalisation de l'invention, les moyens d'alimentation et/ou d'évacuation de pression peuvent notamment comprendre une valve, prévue pour pouvoir être désactivée et/ou connectée à un réservoir de gaz sous pression.
Les moyens de régulation de pression de ce mode de réalisation de l'invention peuvent consister en n'importe quel moyen de régulation pneumatique, hydraulique, mécanique, électrique, électromécanique, électromagnétique, électronique, ou autre.

Selon une caractéristique préférée de l'invention, les moyens de régulation de pression comprennent plus particulièrement une membrane élastiquement déformable, coopérant avec un joint, tel que, par exemple, un joint torique ("O-ring") pour permettre la mise en communication d'une connexion vers la chambre auxiliaire avec une connexion d'évacuation ou de communication vers un réservoir à gaz.

Selon l'invention, la membrane élastiquement déformable peut, notamment, être une membrane élastiquement déformable (en particulier une membrane en acier inoxydable) ou une membrane en matière synthétique (éventuellement renforcée de fibres de verre, de fibres de carbone, de fibres "KEVLAR", etc.).

Selon une caractéristique supplémentaire de l'invention, le dispositif de régulation à membrane élastiquement déformable comprend, de préférence, des moyens pour régler une contre-pression sur la membrane élastiquement déformable.
Ces moyens peuvent être pneumatiques, à pression déterminée (par exemple au moyen d'une bonbonne externe) ou réglables (par exemple par des moyens agissant sur un piston ajustable), ou mécaniques (par exemple au moyen d'un ressort mécanique dont la compression est ajustable).

Le système selon l'invention permet ainsi d'agir en positif et en négatif sur la pression dans la chambre auxiliaire et donc d'évacuer une surpression ou de ré augmenter la pression, selon les besoins.
Il permet d'ajouter, au niveau du régulateur de pression, un accès vers la pression atmosphérique (afin de régénérer le réservoir en position de sous-pression), voire un accès vers un réservoir additionnel de stockage, alimenté par les surpressions générées par le ressort.

D'autres caractéristiques et particularités de l'invention apparaîtront à la lecture de la description, ci après, d'un mode de réalisation particulier du ressort pneumatique selon l'invention et de plusieurs modes de réalisation de moyens de régulation de pression selon l'invention, exposés à titre d'exemples purement illustratifs, en se référant aux dessins annexés, dans lesquels :
la figure 1 montre, schématiquement, un amortisseur à ressort pneumatique, selon l'invention, muni d'une chambre auxiliaire communiquant avec l'intérieur du ressort pneumatique, représenté en position détendue ;
la figure 2 montre l'amortisseur à ressort pneumatique selon la figure 1, représenté en position comprimée ;
la figure 3 montre un premier mode de réalisation d'un système de régulation de pression selon l'invention, à membrane élastiquement déformable, à contre-pression pneumatique, destiné aux ressorts pneumatiques et ensembles amortisseur / ressort pneumatique selon l'invention ;
la figure 4 montre un deuxième mode de réalisation d'un système de régulation de pression selon l'invention, à membrane élastiquement déformable à contre-pression pneumatique réglable ;
la figure 5 montre un troisième mode de réalisation d'un système de régulation de pression selon l'invention, à membrane élastiquement déformable à contre-pression mécanique.

Il est souligné que les détails de ces exemples ne limitent en rien la portée de l'invention telle qu'exposée dans la description ci-dessus et telle qu'énoncée dans les revendications qui suivent.

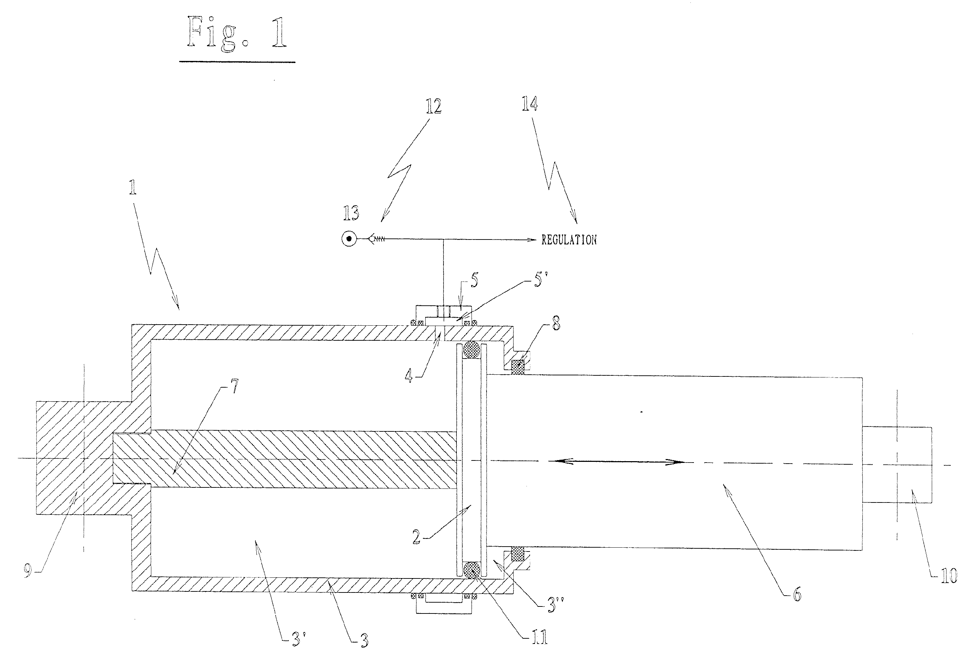

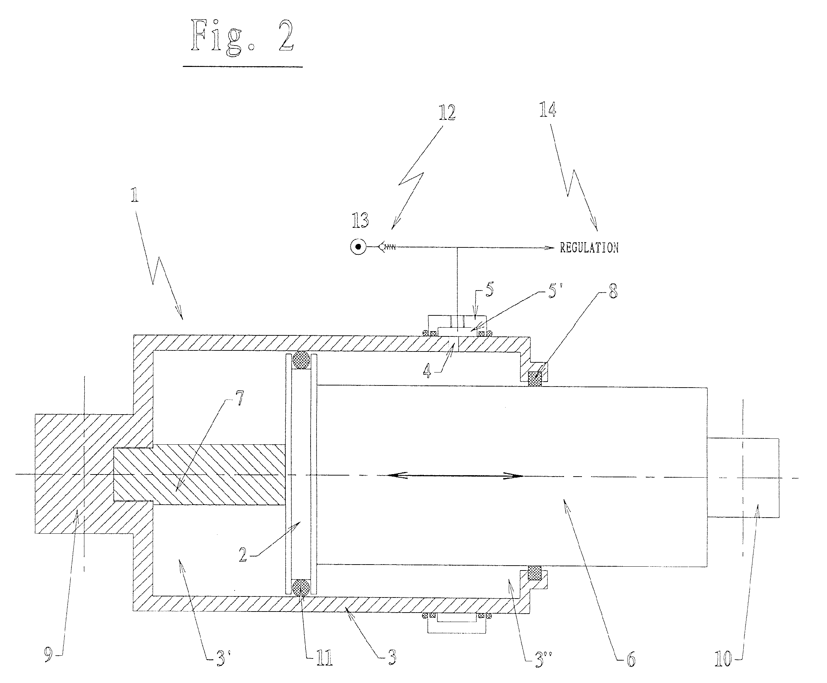

L'amortisseur à ressort pneumatique, représenté aux figures 1 et 2, désigné dans son ensemble par la référence 1, comprend un piston 2 coulissant de manière télescopique dans un cylindre fermé 3, de façon à définir deux chambres 3' et 3".

Un orifice de communication 4, dans la paroi du cylindre 3, connecte l'intérieur du cylindre 3 avec un volume de communication (désigné par la référence 5') à l'intérieur d'une bague 5 appliquée au cylindre 3, constituant ainsi une chambre auxiliaire 5 par rapport au cylindre 3.

L'amortisseur à ressort pneumatique est associé à, ou incorpore, un amortisseur hydraulique 6 proprement dit (un "cylindre hydraulique" ou une "cartouche hydraulique")
- connu en soi, ou selon un nouveau concept faisant l'objet d'une demande de brevet européen de même date que la présente demande -,
   en tant que tige ou axe du piston 2 ;
   l'axe 7 de la cartouche hydraulique prend appui sur le fond du cylindre 3 du ressort pneumatique 1.
   L'étanchéité entre le cylindre pneumatique 3 et la cartouche hydraulique 6 est assurée par un joint d'étanchéité 8.
   Une fixation 9 est prévue sur la partie pneumatique et une fixation 10 sur la partie hydraulique.

L'orifice de communication avec le volume auxiliaire 5', tel que représenté aux figures 1 et 2, est situé à environ 1/5ème de la longueur totale du cylindre 3, se situant ainsi essentiellement au point d'assiette du ressort pneumatique dans le mode de réalisation préconisé dans le présent exemple.
Le volume 5' de la chambre auxiliaire 5 représente environ 5 % du volume total du cylindre 3.
Il faut toutefois rappeler que le volume pertinent dans le contexte de l'invention est le volume auxiliaire total, constitué de tous les volumes en communication directe et continue avec la chambre auxiliaire 5, y compris les volumes communiquants de moyens d'alimentation et/ou d'évacuation de pression (désignés par la référence 12), de moyens de régulation de pression (désignés par la référence 14) et de conduits les reliant à la chambre auxiliaire 5.

La figure 1 montre le ressort pneumatique en position de détente, tandis que la figure 2 montre le ressort pneumatique en position de compression.
Lorsque le piston 2 passe (avec son joint d'étanchéité 11) au niveau de l'orifice 4, la pression des chambres 3' et 3" et de la chambre auxiliaire 5' tendront vers un équilibre.
On peut donc contrôler la pression dans le ressort pneumatique, en contrôlant la pression dans la chambre auxiliaire 5', par des moyens 12 d'alimentations et/ou d'évacuation de pression, comprenant une valve et/ou un système d'alimentation de pression 13 ; ce contrôle de la pression peut donc agir aussi bien dans le sens positif que dans le sens négatif :
en situation de compression du ressort pneumatique, les volumes 3" et 5' peuvent se trouver en situation de dépression par rapport à la pression atmosphérique, ce qui permet, de réalimenter le système à partir de la pression atmosphérique extérieure, grâce à un clapet approprié.
   Pour augmenter la pression dans le ressort, on prévoit une sur-pression dans le système, par exemple à l'aide d'une bonbonne de gaz sous pression ou à partir d'un réservoir de stockage.

En même temps que le contrôle de la pression globale dans le ressort, l'orifice 4 assure un réajustement automatique de la pression dans les deux chambres du ressort, de manière à conserver le point d'assiette, indépendamment de changements de conditions d'utilisation (échauffement de l'amortisseur, augmentation ou diminution de la charge, changement des conditions extérieures, etc.).

On peut également prévoir un contrôle de la pression par un système de régulation 14, soit
de type quelconque, connu en soi, soit
d'un type nouveau, selon la présente invention, impliquant une régulation par membrane élastiquement déformable.

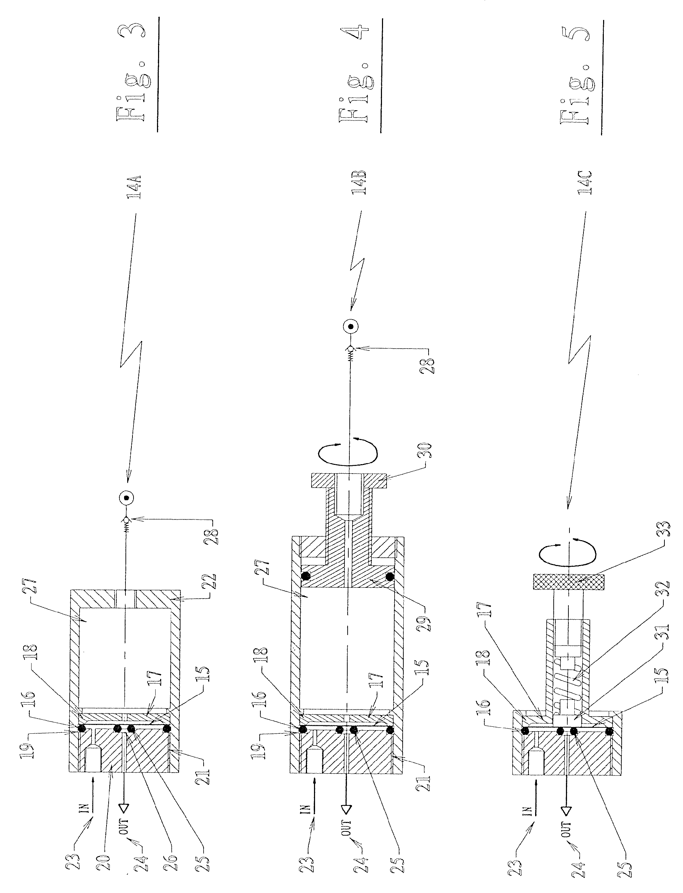

Les figures 3, 4 et 5 montrent trois modes de réalisation 14A, 14B et 14C d'un système de régulation à membrane élastiquement déformable, selon l'invention.
Dans ces trois modes de réalisation, une membrane ronde 15, élastiquement déformable (plus particulièrement une membrane en acier inoxydable, de type feuillard HASBERG 15/100ème), est maintenue appliquée, par son bord latéral extérieur, sur un joint d'étanchéité (joint torique ou O-ring) 16, à l'aide d'un disque 17 à rebord 18.
Le joint d'étanchéité 16 repose, d'autre part, dans un logement annulaire 19 prévu dans une pièce cylindrique 20, elle même positionnée dans une cavité cylindrique 21 du corps 22 du système de régulation 14.
La pièce cylindrique 20 est munie d'un orifice de communication 23 avec la chambre auxiliaire 5' du ressort pneumatique, et d'un orifice de communication 24 avec une évacuation et/ou alimentation de pression.

La membrane élastiquement déformable 15, ainsi fixée sur le joint torique 16, repose en son centre sur un joint torique 25, de plus petite dimension, positionné dans un logement 26 prévu dans la pièce cylindrique 20.
La membrane est maintenue appliquée sur le joint torique 25 par une force (la pression de référence du régulateur) correspondant à l'élasticité de la partie centrale de la membrane élastiquement déformable 15, additionnée d'une force ou pression éventuelle appliquée sur l'autre face de la membrane 15.

Dans le cas du système de régulation 14A représenté à la figure 3, cette force ou pression résulte de la pression pneumatique (déterminée) introduite dans le réservoir 27 via une valve 28.

Dans le cas du système de régulation 14B représenté à la figure 4, cette force ou pression résulte de la pression pneumatique dans le réservoir 27, que l'on contrôle à l'aide d'un piston 29 dont le déplacement est réglable par une molette 30 permettant de modifier manuellement (dans un sens positif ou négatif) la pression introduite par la valve 28.

Dans le cas du système de régulation 14C représenté à la figure 5, cette force ou pression résulte de la force appliquée sur un tampon 31 par un ressort mécanique 32, dont la force peut être réglée à l'aide d'une molette 33.

Le principe de fonctionnement du système de régulation 14 selon l'invention est le suivant :
lorsque la pression dans la chambre auxiliaire 5' du ressort pneumatique est supérieure à la force retenant la membrane élastiquement déformable 15 sur le joint 25, la membrane se soulève légèrement pour laisser échapper le gaz via l'évacuation 24, jusqu'à ce que la pression corresponde à la pression de régulation sur la membrane (et la contre-force ou contre-pression qui y est appliquée).
   La pression de régulation est contrôlée par
   - la pression pneumatique introduite dans le réservoir 27 (système 14A)
   - la pression pneumatique fixée par la molette 30 (système 14B)
   - la force mécanique du ressort 32 réglée par la molette 33 (système 14C).
      Pour ré-alimenter la chambre auxiliaire en pression lorsque celle-ci est descendue en dessous de la pression fixée par la régulation, il suffit de réintroduire (via la valve d'alimentation 13) du gaz à une pression égale ou supérieure à celle fixée par la régulation.

Il est à signaler que de nombreuses variantes des ressorts pneumatiques et amortisseurs à ressort pneumatique apparaîtront aisément à l'homme de l'art sans sortir de la portée de l'invention.
On peut ainsi aisément concevoir de nombreuses variantes en ce qui concerne les moyens (pneumatiques, hydrauliques, mécaniques, électriques, électromécaniques, électromagnétiques, électroniques, ou autre) de régulation de la pression dans la chambre auxiliaire, en prolongement des moyens pneumatiques à pression déterminée, pneumatiques à pression réglable, et mécaniques exposés ci dessus.

## Revendications

1. Ressort pneumatique (1), comprenant un piston (2) coulissant de manière télescopique dans un cylindre fermé (3) de façon à définir deux chambres (3') et (3"), tandis qu'un orifice (4) est prévu dans la paroi du cylindre (3) pour ajuster la pression dans le ressort, **caractérisé en ce que** l'orifice (4) fait communiquer l'intérieur du cylindre (4) avec une chambre auxiliaire (5).

2. Ressort pneumatique selon la revendication 1, **caractérisé en ce que** l'orifice (4) est distant de moins de 25% de la longueur totale du cylindre par rapport à la position du piston au point d'assiette du ressort pneumatique.

3. Ressort pneumatique selon l'une ou l'autre des revendications précédentes, **caractérisé en ce que** la chambre auxiliaire (5) consiste en une chambre annulaire apposée à la paroi externe du cylindre (3) à hauteur de l'orifice (4).

4. Ressort pneumatique selon l'une ou l'autre des revendications précédentes, **caractérisé en ce qu'**il fait partie d'un ensemble d'amortisseur hydraulique / ressort pneumatique dans lequel un cylindre d'amortisseur hydraulique (6) est associé au piston (2) du ressort pneumatique (1) tandis qu'un axe (7) de l'amortisseur hydraulique prend appui sur le cylindre (3) du ressort pneumatique.

5. Ressort pneumatique selon l'une ou l'autre des revendications précédentes, **caractérisé en ce que** la chambre auxiliaire (5) communique avec des moyens d'alimentation et/ou d'évacuation de pression (12) et/ou de régulation de pression (14).

6. Ressort pneumatique selon la revendication 5, **caractérisé en ce que** les moyens d'alimentation et/ou d'évacuation de pression (12) comprennent une valve (13) prévue pour pouvoir être désactivée et/ou connectée à un réservoir de gaz sous pression.

7. Ressort pneumatique selon la revendication 6, **caractérisé en ce que** les moyens de régulation de pression (14) comprennent une membrane élastiquement déformable (15) coopérant avec un joint (25) pour permettre la mise en communication d'une connexion (23) vers la chambre auxiliaire (5) avec une connexion (24) d'évacuation ou de communication vers un réservoir à gaz.

8. Ressort pneumatique selon la revendication 7, **caractérisé en ce que** les moyens de régulation de pression (14) comprennent des combinaisons de moyens (28), (29), (30), (31), (33) pour régler une contre-pression sur la membrane élastiquement déformable.

9. Ressort pneumatique selon l'une ou l'autre des revendications 7 et 8, **caractérisé en ce que** la membrane élastiquement déformable est une membrane métallique.

10. Ressort pneumatique selon l'une ou l'autre des revendications précédentes, **caractérisé en ce que** le joint (25) constitue un joint torique.
